# EUROPÄISCHE PATENTSCHRIFT

(11) **EP 2 925 567 B1**
(45) Veröffentlichungstag und Bekanntmachung des Hinweises auf die Patenterteilung: **02.08.2017**
(21) Anmeldenummer: 13821658.5
(22) Anmeldetag: 26.11.2013
(51) Int. Cl.: B60R 13/02, F16B 5/12

(54) **VORRICHTUNG ZUR BEFESTIGUNG EINER INNENVERKLEIDUNG**
DEVICE FOR ATTACHING OF AN INNER PANEL
DISPOSITIF DE FIXATION D'UN PANNEAU INTÉRIEUR

(30) Priorität: 27.11.2012 CZ 20120849
(43) Veröffentlichungstag der Anmeldung: 07.10.2015
(73) Patentinhaber: Skoda Auto A.S., 293 60 Mladá Boleslav (CZ)
(72) Erfinder: HASEK, Jaroslav, CZ-29501 Mnichovo Hradiste (CZ)
(86) Internationale Anmeldenummer: PCT/CZ2013/000154
(87) Internationale Veröffentlichungsnummer: WO 2014/082607

(56) Entgegenhaltungen:
- FR-A1- 2 891 516
- JP-U- H 055 532
- US-A1- 2011 067 206

## Beschreibung

### Technisches Gebiet

Die Erfindung betrifft eine Vorrichtung zur Befestigung einer Innenverkleidung, insbesondere der Verkleidung der Säulen eines Kraftfahrzeuges.

### Bisheriger Stand der Technik

Das Interieur der Kraftfahrzeuge wird derzeit mit Verkleidungen ausgestattet, die zur Abdeckung von Funktionsmechanismen, Kabelstränge usw. dienen. Es handelt sich insbesondere um die Türverkleidungen, Dachhimmel, Säulenverkleidungen usw. Bei diesen Teilen sind sowohl hohe Ansprüche von Sicht des Innenraumdesigns, wie auch z.B. die Bündigkeit der Fugen der Verkleidungsteile gegenüber den anderen Karosserieteilen, eine minimale Resonanz während der Fahrt sowie der einfache Einbau zu erfüllen. Aus dem genannten geht hervor, dass deren Befestigung zur Fahrzeugkarosserie eine wichtige Rolle spielt. Zu den gängigsten Arten gehört die Befestigung mittels der Schraubverbindungen, weiter ist die Verwendung von Federclips oder Metallklammern bekannt. Aus dem bekannten Stand der Technik ist z.B. die Befestigung der Ränder der Säulenverkleidungen entlang der seitlichen festen Verglasung mit metallischen Spreizclips bekannt. Diese sind in einem Kunststoffgehäuse befestigt, das Bestandteil der Verkleidung ist, und mit federnden Metallschenkel auf das Stegblech aufgesetzt. Für die Einweisung des Teiles in die richtige Position wird der Arretierungszapfen verwendet. Angesichts der Raumaufwendigkeit des Metallclips kann der Arretierungszapfen nicht in das Gehäuse mit dem Clip integriert werden, sondern muss der Arretierungszapfen und das Gehäuse des Metallclips separat ausgebildet werden. Durch die Nutzung der Metallclips kann bei deren Einbau auf die Karosserieteile zur Beschädigung der lackierten Karosseriebereiche kommen und dadurch ein Korrosionsrisiko entstehen. Die Nutzung von Metallclips bedeutet auch ein höheres Gewicht der Baugruppe sowie höhere Anzahl der Arbeitsfolgen an der Montagelinie beim Einbau.

In der US 2011/067206 A1 wird ein Befestigungselement für eine Innenverkleidung eines Fahrzeugs beschrieben, bei dem ein Arretierungszapfen und eine Arretierungsöffnung offenbart sind. Direkt an dem Arretierungszapfen ist ein Federclip angeordnet. Zur Befestigung der Innenverkleidung wird der Arretierungszapfen zusammen mit dem Federclip in die Arretierungsöffnung geführt und zur Fixierung angedrückt.

I n der FR 2 891 516 A1 ist eine Befestigungsanordnung für eine Innenverkleidung einer Fenstersäule eines Fahrzeugs offenbart, die ein Zwischenelement verwendet, um die Bewegung der Innenverkleidung auszugleichen. Das Zwischenelement wird an einem Innenblech mittels eines Federclips fixiert. Die Innenverkleidung wird mittels wiederum mittels eines Federclips an dem Zwischenelement fixiert.

I n der JP H05 5532 U ist eine Befestigungsanordnung für eine Innenverkleidung einer Heckklappe eines Fahrzeugs offenbart. Die Befestigungsanordnung beinhaltet ein Zwischenelement, welches an einer Seite an der Scheibe geklebt und an der anderen Seite über ein weiteres Befestigungselement an der Heckklappe befestigt ist. Die Innenverkleidung wird über zwei Befestigungselement mit Federclipsen, an der einen und der anderen Seite angeordnet sind, an das Zwischenelement befestigt.

### Darstellung der Erfindung

Die Aufgabe wird durch eine Vorrichtung nach Anspruch 1 gelöst. Zur Herstellung der Verbindung weist das Innenblech eine Verprägung auf, in der eine Arretieröffnung angeordnet ist, wobei die Verprägung gegenüberliegend zum Befestigungselement ausgebildet ist.

Zur Bestimmung der vordefinierten Position weist der Arretierungszapfen einen Distanzansatz auf.

### Übersicht der Figuren der Zeichnungen

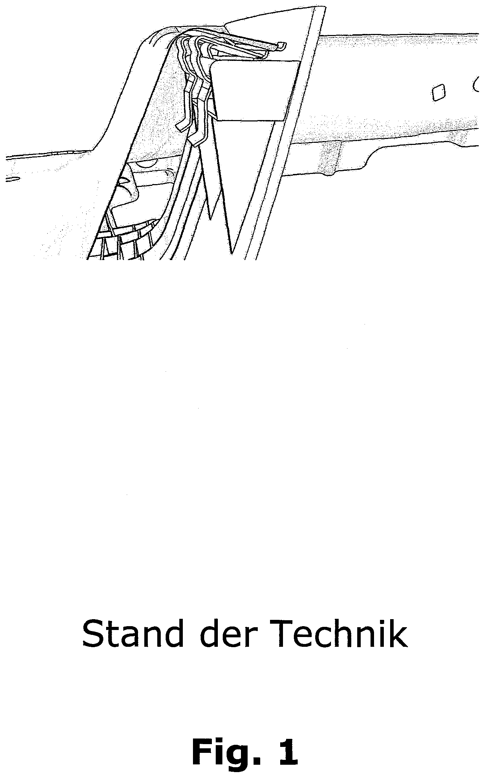

Die Erfindung wird anhand der Ausführungsbeispiele gemäß den beigefügten Zeichnungen näher erläutert, in denen zeigen die Fig. 1 den bekannten Stand der Technik, die Fig. 2 eine perspektivische Ansicht des hinteren Bereiches des Kofferraumes, die Fig. 3 in einer Schnittdarstellung die Befestigung der Säule, die Fig. 4 das Detail des Befestigungselementes und die Fig. 5 die Ansicht der Verprägung des Innenblechs.

### Ausführungsbeispiel der Erfindung

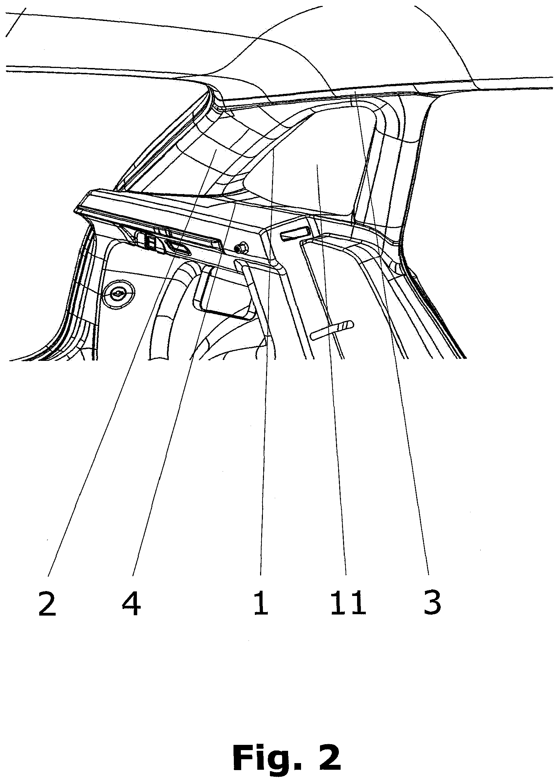

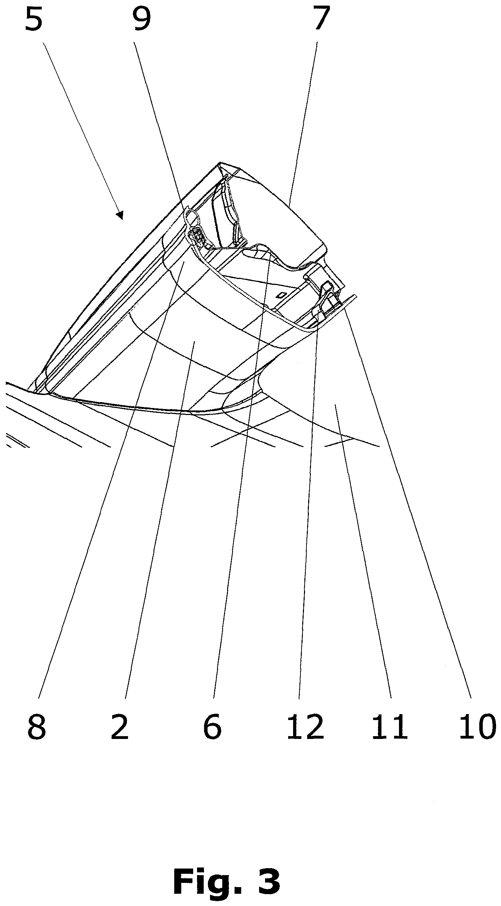

Die Fig. 2 zeigt eine perspektivische Ansicht des hinteren Bereiches eines Fahrzeuginterieurs, in der eine Fensteröffnung 1 umgrenzt durch eine Säulenverkleidung 2, einen Dachhimmel 3 und eine Kofferraumverkleidung 4 dargestellt ist. Der Dachhimmel 3 und die Kofferraumverkleidung 4 sind nicht näher spezifiziert. Wie der Fig. 3 zu entnehmen ist, besteht die eigentliche Vorrichtung zur Befestigung einer Innenverkleidung aus einer Fahrzeugsäule 5, die durch ein Innenblech 6 und einen Außenseitenteil 7 gebildet wird, wo zu der Fahrzeugsäule 5 die Säulenverkleidung 2 anliegt. Diese weist eine einer Profildichtung 9 zugewandte Außenseite 8 und eine einem Seitenfenster 11 zugewandte Innenseite 10 auf. Die Außenseite 8 ist für das Einstecken in die Spalte der Profildichtung 9 ausgestaltet. Die dem Seitenfenster 11 anliegende Innenseite 10 weist Befestigungselemente 12 auf, wobei jedes Befestigungselement 12 einen Arretierungszapfen 13 und einen integrierten Federclip 14 umfasst. Die integrierten Federclips 14 sind vorteilhaft aus Kunststoff ausgebildet. Der Arretierungszapfen 13 weist einen Distanzansatz 15 auf. Den Befestigungselementen 12 gegenüberliegend sind im Innenblech 6 Verprägungen 16 ausgebildet, welche Arretieröffnungen 17 aufweisen. Die Verprägungen 16 weisen eine Kante 18 auf.

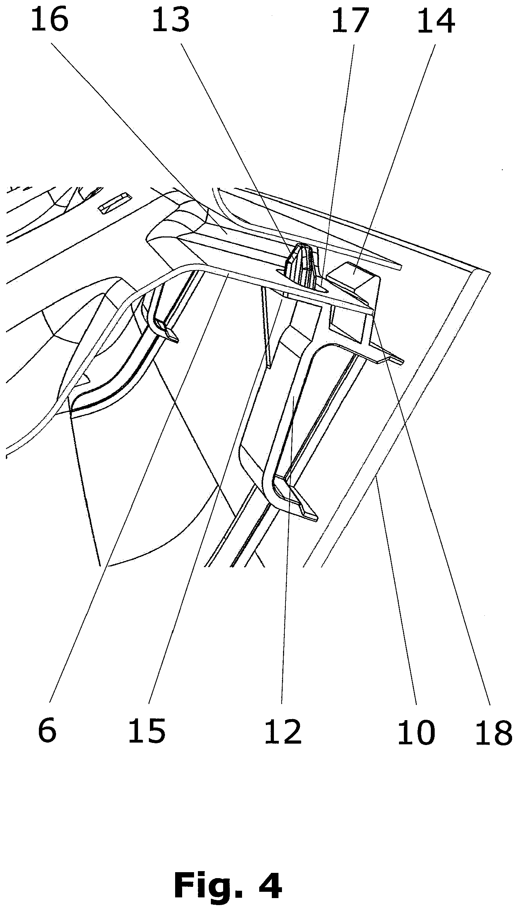

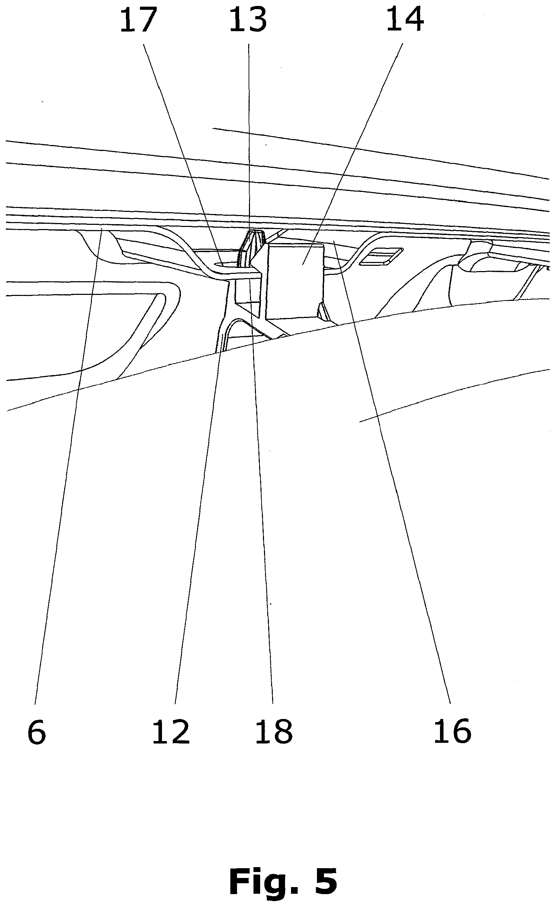

Beim eigentlichen Einbau der Säulenverkleidung 2 wird die Innenseite 10, an der die Befestigungselemente 12 mit Arretierungszapfen 13 und integrierte Federclips 14 angebracht sind, an das Innenblech 6 so angelegt, dass die Arretierungszapfen 13 in die Arretieröffnungen 17 in den Verprägungen 16 des Innenblechs 6 eingreifen und dann durch leichten Druck so eingedrückt werden, dass der Distanzansatz 15 auf die Fläche der Verprägung 16 des Innenbleches 6 aufsetzt. Gleichzeitig rasten die integrierten Federclips 14 hinter die Kante 18 der Verprägung 16 des Innenblechs 6 (s. Fig. 4 und 5) ein. Die Außenseite 8 der Säulenverkleidung 2 wird in die Spalte der Profildichtung 9 eingesteckt. In dieser Stellung wird die Säulenverkleidung 2 in der vordefinierten Position fixiert und ein konstanter Verlauf der Spalte zwischen der Verkleidung und der Verglasung der Fensteröffnung 1 eingehalten. Der Arretierungszapfen 13, der gemeinsam mit dem integrierten Federclip 14 an dem Befestigungselement 12 angeordnet ist, sichert eine bessere Einweisung des Clips 14, wobei die angeführte Anordnung wird den Einbau der Säulenverkleidung 2 vereinfachen, das Gewicht der Baugruppe der Säulenverkleidung 2 senken und nicht zuletzt die Möglichkeit der Beschädigung der Lackierung der Blechteile minimieren. Ebenso wird der beanspruchte Einbauraum reduziert.

### Bezugszeichenliste

- 1: Fensteröffnung
- 2: Säulenverkleidung
- 3: Dachhimmel
- 4: Kofferraumverkleidung
- 5: Fahrzeugsäule
- 6: Innenblech
- 7: Seitenteil außen
- 8: Außenseite
- 9: Profildichtung
- 10: Innenseite
- 11: Seitenfenster
- 12: Befestigungselement
- 13: Arretierungszapfen
- 14: integrierter Federclip
- 15: Distanzansatz
- 16: Einprägung
- 17: Arretieröffnung
- 18: Kante

## Patentansprüche

1. Vorrichtung zur Befestigung einer I nnenverkleidung eines Kraftfahrzeuges, welche durch
• eine Säulenverkleidung (2), die wenigstens ein Befestigungselement (12) und wenigstens einen Arretierungszapfen (13) aufweist,
• eine aus einem Innenblech (6) mit mindestens einer Arretieröffnung (17) bestehenden Fahrzeugsäule (5) und
• einem Außenseitenteil (7) gebildet wird, wo zu der Fahrzeugsäule (5) die Säulenverkleidung (2) anliegt,
**dadurch gekennzeichnet, dass** der Arretierungszapfen (13) an dem Befestigungselement (12) ausgebildet ist, wobei das Befestigungselement (12) zugleich einen integrierten Federclip (14) aufweist, wobei der Arretierungszapfen (13) ausgebildet ist, um in die Arretieröffnung (17) einer Verprägung (16) des Innenblechs (6) einzugreifen und der integrierte Federclip (14) ausgebildet ist, um hinter der Kante (18) der Verprägung (16) des Innenblechs (6) einzurasten, wobei sich die Kante (18) außerhalb der Arretieröffnung (17) befindet.

2. Vorrichtung zur Befestigung einer Innenverkleidung eines Kraftfahrzeuges nach Anspruch 1 **dadurch gekennzeichnet, dass** das Innenblech (6) eine Verprägung (16) aufweist, in der eine Arretieröffnung (17) angeordnet ist, wobei die Verprägung (16) gegenüberliegend zum Befestigungselement (12) ausgebildet ist.

3. Vorrichtung zur Befestigung einer Innenverkleidung eines Kraftfahrzeuges nach Anspruch 1 **dadurch gekennzeichnet, dass** der Arretierungszapfen (13) einen Distanzansatz (15) aufweist.

4. Vorrichtung zur Befestigung einer Innenverkleidung eines Kraftfahrzeuges nach Anspruch 1 **dadurch gekennzeichnet, dass** eine Außenseite (8) der Säulenverkleidung (2) in eine Spalte einer Profildichtung (9) eingesteckt ist.

## Claims

1. Device for fastening an inner panel of a motor vehicle comprising
• a column cover (2) which has at least one fastening element (12) and at least one locking pin (13)
• a vehicle column (5) consisting of an inner panel (6) with at least one locking opening (17), and
• an outer side part (7) on which the column cover (2) rests with respect to the vehicle column (5)
**characterized in that**
the locking pin (13) is formed on the fastening element (12), wherein the fastening element (12) also comprises an integrated spring clip (14), wherein the locking pin (13) is designed to engage in the locking opening (17) of an embossment (16) of the inner panel (6), and wherein the integrated spring clip (14) is designed to engage behind the edge (18) of the embossment (16) of the inner panel (6), wherein the edge (18) lies outside the locking opening (17).

2. Device for fastening an inner panel of a motor vehicle according to claim 1,
**characterized in that**
the inner panel (6) has an embossment (16) in which a locking opening (17) is arranged, wherein the embossment (16) is formed opposite the fastening element (12).

3. Device for fastening an inner panel of a motor vehicle according to claim 1,
**characterized in that**
the locking pin (13) has a distance projection (15).

4. Device for fastening an inner panel of a motor vehicle according to claim 1,
**characterized in that**
an outer side (8) of the column cover (2) is inserted into a gap of a profiled seal (9).

## Revendications

1. Dispositif de fixation d'une garniture intérieure d'un véhicule à moteur, qui comprend :
• une garniture de colonne (2), qui comprend au moins un élément de fixation (12) et au moins un tenon de blocage (13),
• une colonne de véhicule (5) constituée d'une tôle interne (6) avec au moins une ouverture de blocage (17) et
• une partie externe (7) est formée, au niveau de laquelle la garniture de colonne (2) s'appuie contre la colonne de véhicule (5),
**caractérisé en ce que** le tenon de blocage (13) est prévu au niveau de l'élément de fixation (12), l'élément de fixation (12) comprenant également un clip élastique intégré (14), le tenon de blocage (13) étant conçu pour s'emboîter dans l'ouverture de blocage (17) d'un estampage (16) de la tôle interne (6) et le clip élastique intégré (14) étant conçu pour s'encliqueter derrière le bord (18) de l'estampage (16) de la tôle interne (6), le bord (18) se trouvant à l'extérieur de l'ouverture de blocage (17).

2. Dispositif de fixation d'une garniture interne d'un véhicule à moteur selon la revendication 1, **caractérisé en ce que** la tôle interne (6) comprend un estampage (16), dans laquelle est disposée une ouverture de blocage (17), l'estampage (16) étant réalisé en face de l'élément de fixation (12).

3. Dispositif de fixation d'une garniture interne d'un véhicule à moteur selon la revendication 1, **caractérisé en ce que** le tenon de blocage (13) comprend une entretoise (15).

4. Dispositif de fixation d'une garniture interne d'un véhicule à moteur selon la revendication 1, **caractérisé en ce qu'**un côté extérieur (8) de la garniture de colonne (2) est emboîté dans une fente d'un joint d'étanchéité profilé (9).
